Europäisches Patentamt

European Patent Office

Office européen des brevets

(11) Publication number: **0 409 031 A1**

## EUROPEAN PATENT APPLICATION

(21) Application number: **90113048.4**

(22) Date of filing: **09.07.90**

(51) Int. Cl.5: **A01G  27/00**

(30) Priority: **20.07.89 IT 3404689 U**

(43) Date of publication of application:
**23.01.91 Bulletin  91/04**

(84) Designated Contracting States:
**DE DK ES FR GB**

(71) Applicant: **UNIFLEX UTILTIME S.p.A.**
**Via dell'Industria 1**
**I-33086 Montereale Valcellina**
**(Pordenone)(IT)**

(72) Inventor: **Dall'Agnese, Benedetto**
**Via San Giuliano 5/1**
**I-33170 Pordenone(IT)**
Inventor: **Magris, Erme**
**Via Macor 15/A**
**I-33086 Montereale Valcellina, Pordenone(IT)**

(74) Representative: **Giugni, Valter et al**
**PROPRIA Protezione Proprietà Industriale**
**S.p.A. Via Mazzini 13**
**I-33170 Pordenone(IT)**

(54) Integrated water distribution apparatus.

(57) Water distribution apparatus, particularly of the type capable of drawing the water from a water reservoir (5) by means of a lift pump (23) controlled by an electronic programming device and connected with a water distribution pipe.

The apparatus houses inside an outer casing (4), which is formed by modularly assemblable elements (6, 7, 8, 9, 10, 11, 22) and is provided with its own autonomous power supply system (14), both the water collection means (28, 29) and the water storage means (5), as well as the water drawing means (23, 18) and the means (13) for distributing water quantities according to the programme control.

Fig 1

EP 0 409 031 A1

## INTEGRATED WATER DISTRIBUTION APPARATUS

This invention relates to a water distribution apparatus which is capable to perform, in a manner that is fully independent from regular water and power utility supplies, multiple functions of collection, storage and distribution, in a both continuous and discontinuous basis, of variable water quantities.

Watering apparatuses for plants and flowers located in the terraces of flats and similar types of dwellings are already well known. Such watering apparatuses are of a type requiring that a lift pump be dipped inside a reservoir provided to collect and store the water (such as an enflatable basin or tub) and that this pump be then connected with a proper pipe distributing the water to the various plants and flowers.

The operation of said pump is controlled by an electronic control unit which can be either connected to the power mains or be provided with autonomous battery power supply.

A major drawback of such watering apparatuses derives from the inconvenience implied by the need of having to assemble, sometimes in a quite dangerously occasional or fortuitous way, the rather large number of parts required in order to have them in an adequate operating condition.

A further drawback derives from their lacking adequate safety and flexibility in all those cases in which the stored water supply is used to irrigate flowers or plants arranged in terraces located on the opposite sides of a dwelling or in places which are exposed to sun heat, inclemency of the weather, intrusion by animals, or which are even not provided with own water and power supply facilities.

It should further be noticed that the water reservoir needed by these watering apparatuses turns inevitably out to be exposed to both dirt and the evaporating action of the sun rays, and it also acts as a quite dangerous attraction to children's curiosity.

Finally, watering apparatuses of the afore described type put a constraint on their users in that they have to inconveniently place the free ends of the various water delivery hoses or pipes at a level which must be higher that the level of the water in the reservoir, in order to prevent the water itself from being drawn out of the reservoir, due to a siphon-like effect, even when the lift pump is not operating.

Therefore, it is the purpose of the present invention to provide a water distribution apparatus in which the functions of collection, storage and controlled delivery of the water are integrated in an advantageous way.

It is a further purpose of the present invention to provide an apparatus of the afore described type which, apart from being capable of being easily displaceable, ie. being easily moved from and to the most varied places, in such as to ensure a safe and protected service to the user under any operating condition.

These and other aims are reached, according to the invention, in a water distribution apparatus embodying the characteristics as recited in the appended claims.

Such characteristics will be further described hereinafter by way of non-limiting example with reference to the accompanying drawings in which:
- Figure 1 is a perspective and partially sectional view of the apparatus according to the invention;
- Figure 2 is a top view of the apparatus shown in Fig. 1, but with its covering lid removed;
- Figure 3 is a cross-sectional view of two half-shells forming the outer casing of the apparatus.

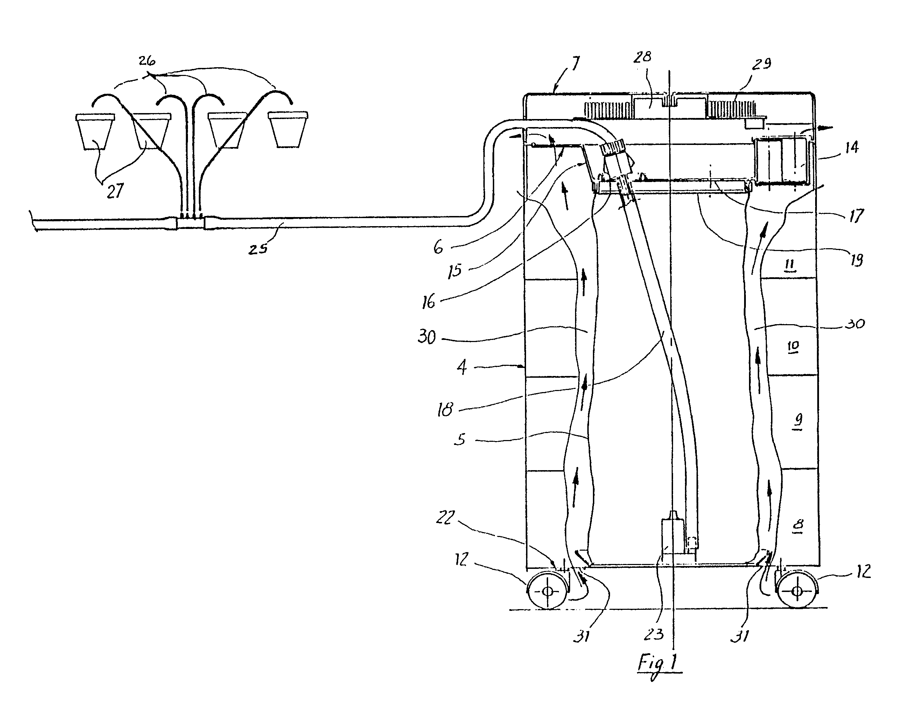

The apparatus shown in the Figures includes an outer casing 4, an inner reservoir 5, a multi-function panel 6, a covering lid 7, and a base element 22. The outer casing 4, which is preferably made of plastic material, is formed by modularly assemblable elements 8, 9, 10, 11 (Fig. 1) that are removably fixed on top of each other.

The base element 22 is provided with castors 12 which enable the whole apparatus to be easily displaced and moved to different places, while the upper modular element 11 acts as a support for the multi-function panel 6. Said multi-function panel 6 houses an electronic control unit 13 and a battery set 14 ensuring an autonomous power supply to the apparatus.

The central part of said multi-function panel 6 features a recess 15 where two through-holes 16, 17 are provided, which enable the water delivery hose 19 to be let through and the inside of the water reservoir 5 to be visually inspected, respectively.

On the lower portion of the recess 15 an annular projection 19 is integrally moulded therewith in order to enable the upper edge of the reservoir 5 to be fastened thereto.

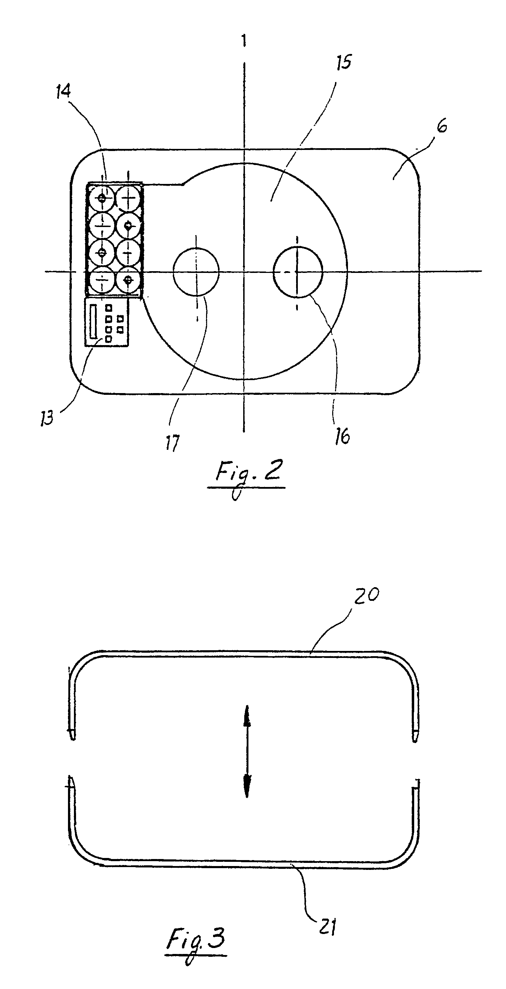

The modular elements 8, 9, 10 and 11 of the outer casing 4 are formed by pairs of half-shells 20, 21 (Fig. 3), which are assembled together by means of snap-fit or press-fit joining systems obtained along their contact edges and not shown in the Figures.

The water storage reservoir 5 is simply formed by a bag of plastic material, the upper edge of which is fixed, by means of conventional fastening means, to the above mentioned annular projection 19 of the panel 6. The bottom portion of the bag 5 rests on the inner side of the base element 22.

A usual type of lift pump 23 is installed on the bottom of the reservoir 5, the delivery side of said pump being connected, through the afore cited pipe 18, with a connection fitting 24 attached into the hole 16 of the multi-function panel 6.

The connection fitting 24, apart from enabling a connection to be made with a water distribution pipe 25 duly provided with number of delivery hoses 26 for the irrigation of the various plants and flowers 27, houses a water filtering device and an automatic water shut-off valve, neither of them shown in the Figures.

The automatic water shut-off valve is specifically intended to prevent water from flowing out of the storage reservoir 5, due to siphon-like effects, when the pump 23 is not operating. A possible embodiment of this valve, as given by way of non-limiting example, may cell for the use of a plugging cap hinged inside the water carrying conduit and continuously biased by a spring or other similar elastic means to slide into its shutting position. The force of such an elastic shutting means is of course adjusted in such a way as to be only overcome, with the resulting opening of the valve, by a pressure of the delivery water which shall not be lower than the one generated by the pump 23.

The covering lid 7 of the apparatus, which is suitably perforated in order to let the distribution pipe 25 be passed therethrough, can be simply laid on the apparatus itself or can be hinged on the multi-function panel 6.

On the inner side of the covering lid 7 a reeling device 7 is advantageously provided in view of winding a water inlet hose 29.

One end of the water inlet hose 29 is provided with a fitting (not shown) for quick connection to a water supply tap.

The other end of the water inlet hose 29 can be inserted into the water storage reservoir 5 through the inspection hole 17 in the multi-function panel 6. This enables the apparatus to be conveniently and quickly filled, while avoiding the inconvenience of having to repeatedly go to and from the apparatus carrying auxiliary fill-up vessels.

A further advantage of the apparatus derives from the fact that a hollow space 30 between the water reservoir 5 and the outer casing 4, as well as a number of ventilation openings 31 passing through the base element 22 and through the peripheral portion around the multi-function panel 6 (Fig. 1), are provided in order to thermally isolate the water reservoir 5 from the outer wall of the casing 4.

In such a way, a ventilating updraft, ie. a current of air travelling upwards, is created all around the hollow space (as indicated by the arrows in Fig. 1), which is effective in preventing the reservoir 5 from excessively heating up, and the water contained therein from evaporating, in all those cases in which the apparatus is exposed to the sun.

With the apparatus according to the present invention, the main object of integrating the different functions of water collection, storage and delivery in a controlled way appears therefore as being fully reached.

Furthermore, the apparatus according to the invention can be easily moved to and from any desired location for any water delivery need whatsoever, ie. even to non-irrigation purposes.

For instance, the apparatus can also be advantageously used for watering animals in a controlled way or ensuring a convenient supply of sanitary water in camping or work environments that are not provided with regular water and power utility connections.

It should further be noticed that the modular assemblability of the casing 4 and the convenient, easy replacement of the reservoir 5 with reservoirs having different capacities enable the user to properly adjust the volume of the water reserve to any water distribution need that may arise.

It will be appreciated that the above described apparatus may be the subject of any modifications considered to be appropriate, without departing from the scopes of the invention.

For example, the apparatus can be designed to accomodate the installation of a container for storing and dispensing fertilizing substances, which would therefore be automatically mixed and delivered together with the irrigation water. Furthermore, the electronic programming and control means, which the apparatus is provided with, can be extended to additionally include a probe for sensing the humidity in the soil of the plants to be irrigated, said probe being capable of causing the control system to start the water distribution and irrigation programme of the apparatus accordingly.

## Claims

1. Water distribution apparatus, particularly of the type which is capable of drawing the water from a water reservoir by means of a lift pump controlled by an electronic programming device and connected with a water distribution pipe, characterized in that said apparatus accommodates within an outer casing (4), which is formed by modularly assemblable elements (6, 7, 8, 9, 10, 11, 22) and is provided with its own autonomous power supply (14), both the water collecting means (28, 29) and the water storage means (5), as well as the water drawing means (23, 18) and the means (13) for distributing water quantities according to the programme control.

2. Water distribution apparatus according to claim 1, characterized in that said outer casing (4) includes a base element (22), which is displaceable on castors (12); an upper element (6) provided with housings to accomodate said power supply means (14) and said electronic programming means(13), said upper element (6) supporting the water reservoir (5) with the related inlet opening (17) and outlet opening (16), and being provided with means (28, 29) for connecting the reservoir (5) with a water supply tap; a top covering lid (7); a plurality of modular elements (8, 9, 10, 11) assembled between said base element (22) and said upper element (6), joined on top of each other in a removable way, and each one of them consisting of two half-shells (20, 21) which are joined together in a disjoinable way.

3. Water distribution apparatus according to claims 1 and 2, characterized in that the reservoir (5) provided for storing the water consists of a bag of plastic material, the aperture of which is fixed with per se known fastening means to an annular projection (19) along the lower edge of said element (6), and the bottom portion of which is simply resting on the inner side of the base element (22).

4. Water distribution apparatus according to claims 1, 2, 3, characterized in that the outlet opening (16) of the reservoir (5), which opening is provided in the upper element (6), houses a connection fitting (24) which is capable of enabling a connection to be made with a water distribution pipe (25) and which is further provided with water filtering means and water shut-off valve means capable of preventing water to flow out of the reservoir (5) when the lift pump (23) is not operating.

5. Water distribution apparatus according to claims 1, 2, 3, 4, characterized in that a hollow space (30) communicating with ventilation apertures (31), which are passing through the base element (22) and through the peripheral portion of the upper element (6), is provided between the outer casing (4) and the water reservoir (5).

Fig 1

EP 0 409 031 A1

_Fig. 2_

_Fig. 3_

## DOCUMENTS CONSIDERED TO BE RELEVANT

EP 90113048.4

| Category | Citation of document with indication, where appropriate, of relevant passages | Relevant to claim | CLASSIFICATION OF THE APPLICATION (Int. Cl.5) |
|---|---|---|---|
| A | WO – A1 – 83/03 520 (ENGEL) * Totality * | 1,2,4 | A 01 G 27/00 |
| A | DE – A1 – 3 310 969 (ENGEL) * Totality * | 1 | |
| A | DE – A1 – 3 227 709 (ENGEL) * Fig. 1 * | 1 | |
| A | DE – A1 – 2 556 536 (GRATZA) * Fig. 3 * | 1 | |
| A | DE – A1 – 2 537 135 (KERN) | | |
| A | DE – A1 – 3 546 459 (WITTE & SUTOR GMBH) | | TECHNICAL FIELDS SEARCHED (Int. Cl.5) |
| A | GB – A – 2 107 962 (SCRIVENS) * Fig. 4 * | | A 01 G<br>A 01 K<br>A 45 F 3/00<br>E 03 B 11/00 |

The present search report has been drawn up for all claims

| Place of search | Date of completion of the search | Examiner |
|---|---|---|
| VIENNA | 23-10-1990 | FESSLER |